# EUROPEAN PATENT SPECIFICATION

(11) **EP 3 603 158 B1**
(45) Date of publication and mention of the grant of the patent: **28.07.2021**
(21) Application number: 17718490.0
(22) Date of filing: 03.04.2017
(51) Int. Cl.: H04W 48/16, H04W 92/20, H04W 24/02

(54) **APPARATUS AND METHOD FOR SLICE AVAILABILITY DISCOVERY**
VORRICHTUNG UND VERFAHREN ZUR SCHICHTVERFÜGBARKEITSERKENNUNG
APPAREIL ET PROCÉDÉ DE DÉCOUVERTE DE DISPONIBILITÉ DE TRANCHE

(43) Date of publication of application: 05.02.2020
(73) Proprietor: Huawei Technologies Co., Ltd., Longgang District Shenzhen, Guangdong 518129 (CN)
(72) Inventor: BULAKCI, Ömer, 80992 Munich (DE); WEI, Qing, 80992 Munich (DE); PATEROMICHELAKIS, Emmanouil, 80992 Munich (DE); TRIVISONNO, Riccardo, 80992 Munich (DE); PENG, Chenghui, 80992 Munich (DE)
(74) Representative: Goddar, Heinz J.
(86) International application number: PCT/EP2017/057881
(87) International publication number: WO 2018/184656

(56) References cited:
- HUAWEI: "Slice Awareness of Availability during Mobility", 3GPP DRAFT; R3-171250_SLICE AWARENESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Spokane, Washington, USA; 20170403 - 20170407 25 March 2017 (2017-03-25), XP051255605, Retrieved from the Internet: URL:http://www.3gpp.org/ftp/tsg_ran/WG3_Iu /TSGR3_95bis/docs/ [retrieved on 2017-03-25]
- "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", 3GPP STANDARD; 3GPP TS 36.300, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.1.0, 30 December 2016 (2016-12-30), pages 1-317, XP051230306, [retrieved on 2016-12-30]
- INTEL CORPORATION: "Network Slicing impacts on RAN2", 3GPP DRAFT; R2-1700326-NETWORK SLICING IMPACTS ON RAN2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Spokane, Wa; 20170117 - 20170119 17 January 2017 (2017-01-17), XP051210906, Retrieved from the Internet: URL:http://www.3gpp.org/ftp/Meetings_3GPP_ SYNC/RAN2/Docs/ [retrieved on 2017-01-17]
- HUAWEI: "Further Discussion on Slice Re-mapping", 3GPP DRAFT; R3-171251 FURTHER DISCUSSIONS ON SLICE RE-MAPPING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Spokane, Washington, USA; 20170403 - 20170407 25 March 2017 (2017-03-25), XP051255606, Retrieved from the Internet: URL:http://www.3gpp.org/ftp/tsg_ran/WG3_Iu /TSGR3_95bis/docs/ [retrieved on 2017-03-25]
- ZTE: "Selection RAN Part Network Slice during UE mobility", 3GPP DRAFT; R3-170065 SELECTION RAN PART NETWORK SLICE DURING UE MOBILITY V6, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG3, no. Spokane, USA; 20170117 - 20170119 7 January 2017 (2017-01-07), XP051212689, Retrieved from the Internet: URL:http://www.3gpp.org/ftp/Meetings_3GPP_ SYNC/RAN3/Docs/ [retrieved on 2017-01-07]

## Description

### TECHNICAL FIELD

The present invention relates to the field of wireless communications, and more particularly to an automated discovery of slice-related information in a communication system.

### BACKGROUND

Network slicing concept is introduced in fifth generation (5G) in order to address the various requirements from multiple vertical industries assuming a shared network infrastructure. Network services can be customized based on the requirements of different use cases, thereby increasing the network operation efficiency. Network slice is an end-to-end concept according to the current definition found in the Third Generation Partnership Project (3GPP) Technical Report (TR) document having the reference [TR23.501] and stating that: "The network slice is a complete logical network that comprises of a set of network functions and corresponding resources necessary to provide certain network capabilities and network characteristics. It includes both 5G RAN (radio access network) and 5G CN (core network)."

Due to diverse deployment and dynamic situations (e.g., load, resource, physical capabilities of the wireless access nodes) in 5G RAN, some slices may be available only in part of the network. Slice availability can also depend on the operator deployment, and different network deployments pertaining to different operators can have different levels of slice availability. Thus, when an active user equipment (UE) moves, it may go towards an area where the active session of its associated slice cannot be supported or available. Therefore, to ensure the service continuity of the UE, the slice related information (slice availability and/or slice support) at the neighboring cells is of particular importance.

In 4G long term evolution (LTE) evolved packet core (EPC), handover (HO) decision is made at the serving evolved node B (SeNB) or at the network. The SeNB makes handover decision based on radio measurement report (e.g., including all the visible transmission points based on the radio resource control (RRC) and the configuration) from the UE, based on UE context (e.g., mobility pattern), and based on network status (e.g., load balancing). Target eNB (TeNB) performs admission control based on the availability of resources and accepts the HO request only if it is available. Each eNB can maintain also a closed subscribe group (CSG) list and can only accept the HO request from the UEs listed in the CSG. In addition, as one of the self-organization network (SON) feature set specified for LTE, automatic (also referred to as autonomous or automated) neighbor relation (ANR) comprises mechanisms to detect a new neighboring cell based on UE measurements in order to minimize the manual drive tests by the network operators. Indeed, manual drive tests are costly and time consuming if new access node deployments, network densification and unplanned small cell deployments are especially considered. However, these state-of-the-art (SoA) solutions do not factor in a slice-specific treatment nor an autonomous or automatic distribution of the slice availability information.

The 3GG TR document having the reference [TR38.801] states that: "The RAN and the CN are responsible to handle a service request for a slice that may or may not be available in a given area. Admission or rejection of access to a slice may depend by factors such as support for the slice, availability of resources, support of the requested service by other slices." Thus, without the slice availability information at neighboring cells before a HO event occurs, the TeNB could reject the access to a slice in case of receiving a handover request from an unavailable slice, which would result in a HO failure. However, the increase in the number of HO failures can introduce more signaling overhead and also increased latency, and the lack of slice availability information can result in a suboptimum handover decision too.

HUAWEI, "Slice Awareness of Availability during Mobility", 3GPP DRAFT, R3-171250, vol. 3GPP TSG RAN WG3 95bis, no. Spokane, Washington, USA; 20170403 - 20170407 discusses the effect of slice availability at a source node during mobility, and presents relevant solutions of how to make gNB aware of slice availability.

3GPP TS 36.300, V14.1.0 (2016-12): "3rd Generation Partnership Project; Technical Specification Group Radio Access Network; Evolved Universal Terrestrial Radio Access (E-UTRA) and Evolved Universal Terrestrial Radio Access Network (E-UTRAN); Overall description; Stage 2 (Release 14)", provides an overview and overall description of the E-UTRAN radio interface protocol architecture. It also discloses intra-LTE/frequency automatic neighbor relation function.

### SUMMARY

It is therefore an object of the present invention to provide an apparatus and a method to discover slice-related information by enabling an autonomous awareness of the neighboring cells about the slice availability and/or slice support information. Thereby, a reliable and efficient UE mobility and service continuity may be achieved.

The object is achieved by the features of the independent claims. Further embodiments of the invention are apparent from the dependent claims, the description and the drawings.

According to a first aspect, the invention relates to a method for discovering slice-related information within a communication system. The method comprises the step of identifying at least one target cell in the neighborhood of a serving cell by obtaining identification information from a user equipment (UE) device having an active communication with the serving cell and being associated with at least one slice and/or a slice-type, the step of obtaining slice-related information of the identified at least one target cell, the step of establishing a connection (Xn) between the serving cell and the identified at least one target cell, and the step of updating a neighbor relation table (NRT) of the serving cell with the slice-related information of the identified at least one target cell.

In an exemplary embodiment, the obtained identification information of the identified at least one target cell may comprise a physical cell identity (PCI) and/or a cell global identifier (CGI).

According to a further implementation form of the first aspect, the slice-related information comprises slice availability information or slice-type support information or a combination of the slice availability information and the slice-type support information.

The Xn connection refers to the communication link between cells, e.g., between neighboring target cell and serving cell. A similar interface between cells in LTE is called X2 interface between eNBs. The Xn connection may be a direct link, e.g., provided by a fiber optic link or millimeter-wave wireless link, or may be an indirect link where there could be routers between the cells. Accordingly, the Xn connection can be referred to as a logical interface between cells.

The slice availability information may be static information (e.g., the slices are already instantiated), while the slice-type support information may be semi-static or semi-dynamic information. Furthermore, the slice-related information of the identified at least one target cell with which the NRT of the source cell is updated may comprise the slice-type support information of the identified at least one target cell when the at least one slice and/or the slice-type of the UE device is not contained in the slice availability information of the identified at least one target cell. On the other hand, the slice-related information of the identified at least one target cell with which the NRT of the source cell is updated may comprise the slice availability information of the identified at least one target cell when the at least one slice and/or the slice-type of the UE device is contained in the slice availability information of the identified at least one target cell.

According to a further implementation form of the first aspect, the slice-related information of the identified at least one target cell is derived from broadcast system information (SI) through decoding.

In an exemplary embodiment, decoding may be carried out by the UE device attached to (i.e., having an active communication with) the serving cell. In a further exemplary embodiment, decoding may be carried out by the target and/or serving cells (e.g., base stations (BSs), gigabit Node Bs (gNBs), evolved Node Bs (eNBs), and small cells), in case of, for example, a dynamic time division duplex (TDD) operation.

According to a further implementation form of the first aspect, the slice-related information of the identified at least one target cell is known a priori by the serving cell, or is obtained from the identified at least one target cell through the established connection (Xn) and/or during the connection (Xn) establishment when the slice-related information is not found upon decoding broadcast system information (SI) or it is known a priori that the slice-related information is not in the broadcast system information (SI).

It should be noted that obtaining the slice-related information (i.e., the slice availability information and/or the slice-type support information) during the establishment of the Xn communication allows to reduce the latency or delay possibly incurred when such information is obtained after the Xn connection establishment on an event basis.

According to a further implementation form of the first aspect, a request for the slice-related information of the identified at least one target cell is transmitted from the serving cell towards a slice controlling entity.

According to a further implementation form of the first aspect, the slice-related information of the identified at least one target cell is transmitted from the slice controlling entity towards the serving cell in response to the transmitted request for the slice-related information of the identified at least one target cell from the serving cell towards the slice controlling entity.

According to a further implementation form of the first aspect, the slice controlling entity is adapted to receive the slice-related information of the identified at least one target cell from the identified at least one target cell, prior to receiving the request for the slice-related information of the identified at least one target cell from the serving cell and/or upon receipt of the request for the slice-related information of the identified at least one target cell from the serving cell.

According to a further implementation form of the first aspect, the slice-related information of the identified at least one target cell is received at the slice controlling entity in response to a request for the slice-related information of the identified at least one target cell from the slice controlling entity towards the identified at least one target cell.

According to a further implementation form of the first aspect, the slice-related information of the identified at least one target cell is received at the slice controlling entity periodically and/or upon an event basis.

According to a further implementation form of the first aspect, the slice controlling entity is a logical unit, which is located in the radio access network (RAN) or the core network (CN) or a RAN slice management module.

In an exemplary embodiment, the slice controlling entity may be located in a 5G core network, for example, at an access and mobility management function (AMF) of the 5G core network.

According to a further implementation form of the first aspect, a request for the slice availability information of the identified at least one target cell is transmitted from the serving cell towards the slice controlling entity, and wherein the slice availability information of the identified at least one target cell is transmitted from the slice controlling entity towards the serving cell in response to the transmitted request for the slice availability information of the identified at least one target cell from the serving cell towards the slice controlling entity.

According to a further implementation form of the first aspect, a request for the slice-type support information of the identified at least one target cell is transmitted from the serving cell towards the slice controlling entity, when the at least one slice and/or the slice-type of the UE device is not contained in the slice availability information of the identified at least one target cell.

According to a further implementation form of the first aspect, the slice-type support information of the identified at least one target cell is transmitted from the slice controlling entity towards the serving cell, in response to the transmitted request for the slice-type support information of the identified at least one target cell from the serving cell towards the slice controlling entity.

According to a further implementation form of the first aspect, a request for the slice-type support information of the identified at least one target cell is transmitted from the serving cell towards the identified at least one target cell through the established connection (Xn) and/or during the connection (Xn) establishment, when the at least one slice and/or the slice-type of the UE device is not contained in the slice availability information of the identified at least one target cell.

According to a further implementation form of the first aspect, the slice-type support information of the identified at least one target cell is transmitted from the identified at least one target cell towards the serving cell through the established connection (Xn) and/or during the connection establishment (Xn), in response to the transmitted request for the slice-type support information of the identified at least one target cell from the serving cell towards the identified at least one target cell.

It should be noted that obtaining the slice-type support information during the establishment of the Xn communication allows to reduce the latency or delay possibly incurred when such information is obtained after the Xn connection establishment on an event basis.

According to a further implementation form of the first aspect, the slice-related information of the serving cell is transmitted from the serving cell towards the identified at least one target cell through the established connection (Xn) and/or during the connection (Xn) establishment.

It should be noted that obtaining the slice-related information (i.e., the slice availability information and/or the slice-type support information) during the establishment of the Xn communication allows to reduce the latency or delay possibly incurred when such information is obtained after the Xn connection establishment on an event basis.

According to a further implementation form of the first aspect, the slice-related information of the serving cell is transmitted from the serving cell towards the identified at least one target cell through a connection between the serving cell and the slice controlling entity and through a subsequent connection between the slice controlling entity and the identified at least one target cell.

This implementation form of the first aspect may occur, for example, when the Xn connection (established or not yet established or being established) between the serving cell and the identified at least one target cell is unavailable, or when standardization and/or implementation requirements are to be observed.

According to a further implementation form of the first aspect, the NRT of the identified at least one target cell is updated with the slice-related information of the serving cell.

The above object is also solved in accordance with a second aspect.

According to the second aspect, the invention relates to a serving cell for discovering slice-related information within a communication system. The serving cell is adapted to identify at least one target cell in the neighborhood of the serving cell by obtaining identification information from a user equipment (UE) device through a radio resource control (RRC), to obtain slice-related information of the identified at least one target cell, to establish a connection (Xn) between the serving cell and the identified at least one target cell, and to update a neighbor relation table (NRT) of the serving cell with the obtained slice-related information of the identified at least one target cell, wherein the UE device, which has an active communication with the serving cell, is associated with at least one slice and/or a slice-type.

According to a further implementation form of the second aspect, the NRT of the identified at least one target cell is updated with the slice-related information of the serving cell.

According to a further implementation form of the second aspect, the serving cell comprises an enhanced automatic neighbor relation (eANR) module adapted to control and manage the NRT by updating the NRT of the serving cell with the obtained slice-related information of the identified at least one target cell, and a radio resource control (RRC) as specified in the second aspect, which is adapted to configure the UE device and interface the eANR module and the UE device, the identification information being obtained from the UE device through the RRC.

According to a further implementation form of the second aspect, the serving cell comprises the NRT of the serving cell.

According to a further implementation form of the second aspect, the eANR module is adapted to communicate with a slice controlling entity and to update the NRT of the serving cell with the obtained slice-related information of the identified at least one target cell from the slice controlling entity.

In an exemplary embodiment, the slice controlling entity may be a logical unit and be located in the RAN or the CN or a RAN slice management module.

According to a further implementation form of the second aspect, the slice controlling entity comprises the NRT of the serving cell and/or the NRT of the identified at least one target cell. Thereby, all the NRTs may be located in the slice controlling entity. To that extent and if a central aggregation unit may be provided, for example, in the RAN, the slice controlling entity may comprise a single multi-dimensional NRT comprising the respective NRTs of all the neighboring cells (i.e., the serving cell and the at least one target cell).

The above object is also solved in accordance with a third aspect.

According to the third aspect, the invention relates to a communication system comprising a serving cell as claimed in the second aspect and any one of the implementation forms of the second aspect, at least one target cell as specified in the second aspect, and a user equipment (UE) device as specified in the second aspect.

According to a further implementation form of the third aspect, the communication system comprises a slice controlling entity as specified in the corresponding implementation forms of the second aspect.

The above object is also solved in accordance with a fourth aspect.

According to the fourth aspect, the invention relates to a computer program comprising a program code for performing the method according to the first aspect or any one of the implementation forms of the first aspect when executed on a computer.

Thereby, the method can be performed in an automatic and repeatable manner.

The computer program can be performed by the above apparatuses.

More specifically, it should be noted that all the above apparatuses may be implemented based on a discrete hardware circuitry with discrete hardware components, integrated chips or arrangements of chip modules, or based on a signal processing device or chip controlled by a software routine or program stored in a memory, written on a computer-readable medium or downloaded from a network such as the Internet.

It shall further be understood that a preferred embodiment of the invention can also be any combination of the dependent claims or above embodiments with the respective independent claim.

These and other aspects of the invention will be apparent and elucidated with reference to the embodiments described hereinafter.

### BRIEF DESCRIPTION OF THE DRAWINGS

In the following detailed portion of the present disclosure, the invention will be explained in more detail with reference to the exemplary embodiments shown in the drawings, in which:
- Fig. 1: shows an exemplary schematic architecture of a wireless communication system 100, according to an embodiment of the present invention;
- Fig. 2: shows a signaling flow diagram illustrating a first method for slice-related information discovery and updating at least one NRT based on the slice-related information, according to an embodiment of the present invention;
- Fig. 3: shows a signaling flow diagram illustrating a second method for slice-related information discovery and updating at least one NRT based on the slice-related information, according to an embodiment of the present invention; and
- Fig. 4: shows a signaling flow diagram illustrating a third method for slice-related information discovery and updating at least one NRT based on the slice-related information, according to an embodiment of the present invention.

Identical reference signs are used for identical or at least functionally equivalent features.

### DETAILED DESCRIPTION OF EMBODIMENTS OF THE INVENTION

In the following, the term "gNB" refers to "next generation node B" also referred to as "gigabit node B" (i.e., an access node in 5G network), and the terms "serving" and "source" applied to gNB/cell may be interchangeably used. Thus, a gNB/cell may be designated as a serving gNB/cell with respect to a UE device, while the same gNB/cell may be designated as a source gNB/cell with respect to a target gNB/cell. In any case, it is admitted that the term "serving gNB/cell" may replace the term "source gNB/cell" and vice versa.

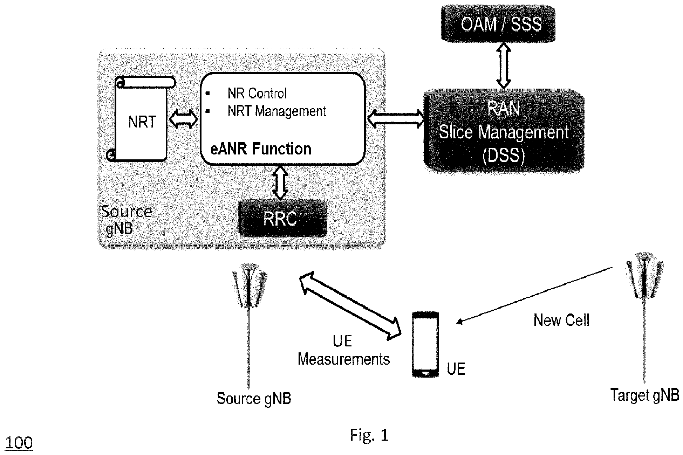

Fig. 1 shows an exemplary schematic architecture of a wireless communication system 100, according to an embodiment of the present invention.

As illustrated, the system 100 comprises a UE device, a serving gNB, at least one target gNB, a RAN slice management module, and an operations, administration and maintenance (or management) (OAM) and slice support system (SSS) module (OAM/SSS module).

The UE device, which is attached to the serving gNB through an active communication link, moves from a currently located radio zone towards a neighboring radio zone through an overlapping region of the cell edge region of the serving gNB and the cell edge region of one or more neighboring or target gNBs. A neighboring or target gNB may be defined as a gNB that is in the vicinity of the serving gNB and is susceptible under certain conditions to become, through a HO process, the "new" serving gNB, once the UE device is detached from said "old" serving gNB to be attached to said "new" serving gNB. Thus, if the conditions are met, the communication with the UE device may be handed over from the serving gNB towards the target gNB. In the following, the UE device is furthermore associated with at least one slice and/or a slice-type.

The depicted serving gNB comprises an enhanced automatic neighbor relation (eANR) module, a neighbor relation table (NRT) and a radio resource control (RRC). It should be noted that, in another exemplary embodiment, the NRT may be located outside the gNB, for example in the depicted RAN slice management module.

As a SON functionality, the functionality of the eANR module consists of a neighbor relation control and a NRT management in order to functionally control and update the NRT. The eANR module may be located, for example, in the gNB (as shown in Fig. 1) or in a RAN controller. The updates on the NRT, which may consist in adding, removing or modifying neighbor relations (e.g., slice-related information), may be based on the UE measurements reported from the UE device towards the serving gNB through a RRC interface and/or based on a communication with a slice controlling entity inside the RAN slice management module, which in turn may reside in a domain support system (DSS). The slice controlling entity is a logical unit, which may be located, in other exemplary embodiments, in the RAN or the core network (CN) (e.g., 5G CN with access and mobility management function (AMF)). Depending on these different locations, appropriate interfaces shall be required (e.g., NG2 aka N2 between the serving gNB and the slice controlling entity when the latter is located in the CN or next generation fronthaul interface (NGFI) when the latter is located in a RAN aggregation unit or RAN central unit). As a logical entity, the DSS aims to ensure the real-time guarantee for slice service level agreement (SLA) capabilities in each technical domain, e.g., RAN, transport network (TN), core network (CN). Furthermore, the RAN slice management module may communicate with the OAM/SSS module, wherein SSS functionality may consist of a network slice life cycle management. This communication with the OAM/SSS module may enable, for example, to get an initial list of the NRT and/or to get periodic or event-triggered slice availability reports. Furthermore, the gNBs may inform the OAM/SSS module about autonomous cells (e.g., femtocells, unplanned small cells, and newly deployed cells), their respective capabilities and/or the availability of their respective slice(s), e.g., by communicating their slice-related information, which allows resource management and provisioning to be accordingly adapted.

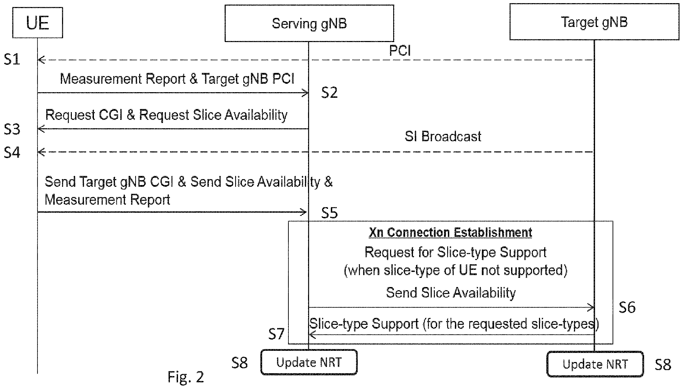

In the present invention, the updates on the NRT are based on a slice-related discovery. To that extent, exemplary three embodiments referring to Fig. 1 and corresponding to respective Figs. 2 to 4 are described in the following, wherein the slice-related information may comprise slice availability information or slice-support information or a combination of the slice availability information and the slice-type support.

As above-mentioned, the UE device is assumed to have an active communication link to the serving gNB, while the target gNB is a neighboring cell to which the UE device may be handed over. Each gNB may have identification information by being, for example, identified by a physical cell ID (PCI) and/or a cell global identifier (CGI). In LTE, for example, there is a limited number of 504 PCIs, so that a same PCI may be reused to identify several cells. Thus, a cell may not be identified only by the PCI, and the uniqueness of the identification may then be ensured using the CGI.

Fig. 2 shows a signaling flow diagram illustrating a first method for slice-related information discovery and updating at least one NRT based on the slice-related information, according to an embodiment of the present invention. In this embodiment, the slice availability information of the identified target gNB may be derived from broadcast system information (SI), e.g., system information blocks (SIBs). However, it should be noted that the slice-type support information may also be contained in the SI, e.g., if the slice-type support is semi-static, so that the slice availability information and/or the slice-type support information might be derived from the broadcast SI.

In a first step (S1), the UE device may detect the PCI of the target gNB by decoding primary synchronization signal (PSS) and secondary synchronization signal transmitted from the access nodes.

In a second step (S2), the UE device may be configured by RRC, which resides in the serving gNB, in order to send a measurement report containing the detected PCI of the target gNB towards the serving gNB, when certain conditions are fulfilled and/or a measurement event is triggered. For example, this may be the case when the received signal strength of the target gNB is higher than the received signal strength of the serving gNB during a determined time duration (e.g., time-to-trigger (TTT)). The received signal level may be a reference signal received power (RSRP) and/or a reference signal received quality (RSRQ) or any other metric that can be utilized to determine the communication link quality.

In a third step (S3), when the detected PCI from the UE device is not known by the serving gNB and/or slice-related information of the target gNB is not up-to-date (e.g., due to a timer expiry), the serving gNB may instruct the UE device to obtain the CGI of the target gNB along with the slice availability information when the slice availability information is available in the system information (SI). The SI may comprise a static part, such as a master information block (MIB), and a dynamic part, such as a system information block (SIB).

For example, in more details, the physical broadcast channel (PBCH) is transmitted in the first four orthogonal frequency-division multiplexing (OFDM) symbols in the second slot of the first sub-frame of the radio frame. The PBCH carries the SI necessary for the wireless device (i.e., the UE device) to communicate with the base station (i.e., the gNB), and the SI that is transmitted through the PBCH is denoted by MIB. On the other hand, the SI that is transmitted through the physical downlink shared channel (PDSCH) indicated by the physical downlink control channel (PDCCH) is denoted by SIB. The slice-type support and slice availability information may comprise a slice_ID, which may be a general term indicating the type of the slice (e.g., a session management network slice selection assistance information (SM-NSSAI) as specified in the 3GG TR document having the reference [TR23.799], wherein the SM-NSSAI may include the network slice/service type (SST) and slice differentiator (SD)), and may also comprise the service level indication of the slice (e.g., a service grade).

In a fourth step (S4), the UE device may decode the CGI and slice availability information of the target gNB to be identified, after receiving the broadcast SI.

In a fifth step (S5), the UE device may report these identification and slice-related information elements towards the serving gNB in response to its request.

In a sixth step (S6), the serving gNB may then start to establish an Xn connection (comparable to the X2 connection in LTE) to the identified target gNB. The Xn connection between the serving gNB and the target gNB may be a logical connection or a physical connection. During the Xn connection establishment (i.e., when the Xn connection is being established) and/or once the Xn connection is established, the serving gNB may send its own slice availability information towards the identified target gNB. Moreover, when the at least one slice and/or slice-type of the UE device is not listed in the slice availability reporting, the serving gNB may also request the slice-type support information from the identified target gNB.

In a seventh step (S7), the serving gNB may receive the requested slice-type support information for the requested slice-types from the identified at least one target gNB.

In an eighth step (S8), the NRT of the identified target gNB may be updated with the slice availability and/or slice-type support information of the serving gNB, and the NRT of the serving gNB may be updated with the slice availability and/or slice-type support information of the identified target gNB. It should be noted that the gNBs may decide on the suitability of adding the new fields in the NRTs, e.g., based on the UE measurement reports and gNB rankings. Thus, the serving gNB might instruct the UE to decode slice availability information only for a determined/limited number of candidate target gNBs.

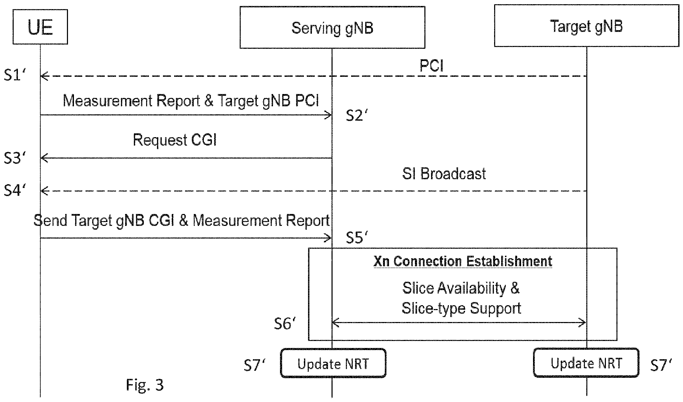

Fig. 3 shows a signaling flow diagram illustrating a second method for slice-related information discovery and updating at least one NRT based on the slice-related information, according to an embodiment of the present invention. In this embodiment, the slice availability information of the identified target gNB is known a priori by the serving gNB, or is obtained from the identified target gNB through the established Xn connection and/or during the Xn connection establishment when the slice availability information is not found upon decoding the SI or it is known a priori that the slice availability information is not in the broadcast SI.

In a first step (S1'), the UE device may detect the PCI of the target gNB by decoding primary synchronization signal (PSS) and secondary synchronization signal transmitted from the access nodes.

In a second step (S2'), the UE device may be configured by RRC, which resides in the serving gNB, in order to send a measurement report containing the detected PCI of the target gNB towards the serving gNB, when certain conditions are fulfilled and/or a measurement event is triggered. For example, this may be the case when the received signal strength of the target gNB is higher than the received signal strength of the serving gNB during a determined time duration (e.g., time-to-trigger (TTT)). The received signal level may be a reference signal received power (RSRP) and/or a reference signal received quality (RSRQ) or any other metric that can be utilized to determine the communication link quality.

In a third step (S3'), when the detected PCI from the UE device is not known by the serving gNB and/or slice-related information of the target gNB is not up-to-date (e.g., due to a timer expiry), the serving gNB may instruct the UE device to obtain the CGI of the target gNB but not the slice availability information when the slice availability information is unavailable in the system information (SI). In a further exemplary embodiment, the UE may be instructed to decode the slice availability information in the SI but the slice availability information is not found upon decoding the SI.

In a fourth step (S4'), the UE device may decode the CGI of the target gNB to be identified, after receiving the broadcast SI.

In a fifth step (S5'), the UE device may report this identification information towards the serving gNB in response to its request.

In a sixth step (S6'), the serving gNB may then start to establish an Xn connection (comparable to the X2 connection in LTE) to the identified target gNB. The Xn connection between the serving gNB and the target gNB may be a logical connection or a physical connection. During the Xn connection establishment (i.e., when the Xn connection is being established) and/or once the Xn connection is established, the serving gNB and the target gNB may exchange their respective slice availability information along with their slice-type support information or, in particular, slice-related information in, for example, a request/acknowledgement manner.

In a seventh step (S7'), the NRT of the identified target gNB may be updated with the slice-related information of the serving gNB, and the NRT of the serving gNB may be updated with the slice-related information of the identified target gNB.

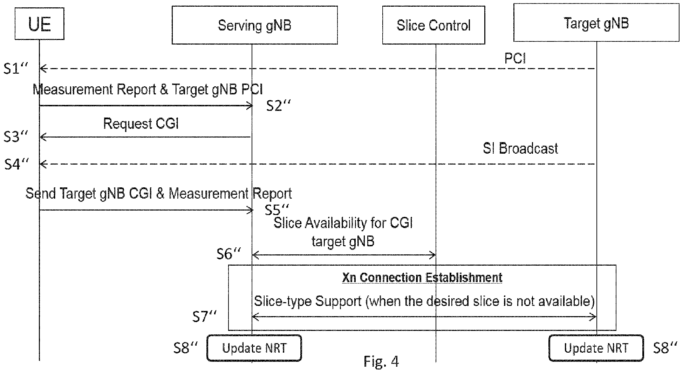

Fig. 4 shows a signaling flow diagram illustrating a third method for slice-related information discovery and updating at least one NRT based on the slice-related information, according to an embodiment of the present invention. In this embodiment, the slice availability information of the identified target gNB is obtained from the slice controlling entity (e.g., inside the RAN slice management module of Fig. 1) when the slice availability information is not found upon decoding the SI or it is known a priori that the slice availability information is not in the broadcast SI.

In a first step (S1"), the UE device may detect the PCI of the target gNB by decoding primary synchronization signal (PSS) and secondary synchronization signal transmitted from the access nodes.

In a second step (S2"), the UE device may be configured by RRC, which resides in the serving gNB, in order to send a measurement report containing the detected PCI of the target gNB towards the serving gNB, when certain conditions are fulfilled and/or a measurement event is triggered. For example, this may be the case when the received signal strength of the target gNB is higher than the received signal strength of the serving gNB during a determined time duration (e.g., time-to-trigger (TTT)). The received signal level may be a reference signal received power (RSRP) and/or a reference signal received quality (RSRQ) or any other metric that can be utilized to determine the communication link quality.

In a third step (S3"), when the detected PCI from the UE device is not known by the serving gNB and/or slice-related information of the target gNB is not up-to-date (e.g., due to a timer expiry), the serving gNB may instruct the UE device to obtain the CGI of the target gNB but not the slice availability information when the slice availability information is unavailable in the system information (SI). In a further exemplary embodiment, the UE may be instructed to decode the slice availability information in the SI but the slice availability information is not found upon decoding the SI.

In a fourth step (S4"), the UE device may decode the CGI of the target gNB to be identified, after receiving the broadcast SI.

In a fifth step (S5"), the UE device may report this identification information towards the serving gNB in response to its request.

In a sixth step (S6"), a request for a slice availability information of the identified target gNB is transmitted from the serving gNB towards the slice controlling entity, and the slice availability information of the identified target cell is transmitted from the slice controlling entity towards the serving cell in, for example, a request/acknowledgment manner. In the request, the identity of the target gNB (e.g., the target gNB CGI) is communicated towards the slice controlling entity in order to obtain the slice availability information associated with the desired target gNB.

In a seventh step (S7"), the serving gNB may start to establish an Xn connection (comparable to the X2 connection in LTE) to the identified target gNB. The Xn connection between the serving gNB and the target gNB may be a logical connection or a physical connection. During the Xn connection establishment (i.e., when the Xn connection is being established) and/or once the Xn connection is established, the serving gNB may send its own slice-related information (e.g., its own availability information and/or its own slice-type support information) towards the identified target gNB. In the case where the Xn connection (established, not yet established or being established) between the serving gNB and the identified target gNB is unavailable or some standardization and/or implementation requirements are to be observed, the serving gNB may send its own slice-related information towards the identified target gNB through a communication link between itself (i.e., the serving gNB) and the slice controlling entity and through a subsequent communication link between the slice controlling entity and the identified target gNB. These communication links from/to the slice controlling entity will be assumed to fulfill the requirements of information exchange, such as latency.

Moreover, when the at least one slice and/or slice-type of the UE device is not listed in the slice availability reporting from the slice controlling entity, the serving gNB may also request the slice-type support information from the target gNB during the Xn connection establishment or through the established Xn connection. In response, the identified target gNB may send the requested slice-type support information for the requested slice-types towards the serving gNB during the Xn connection establishment or through the established Xn connection. In another exemplary embodiment (not depicted), the serving gNB may request the slice-type support information from the slice controlling entity through the communication link, and in response, the slice controlling entity may send the requested slice-type support information for the requested slice-types towards the serving gNB. Furthermore, the slice controlling entity may be adapted to receive the slice-related information (e.g., the slice availability information and/or the slice-type support information) of the identified at least one target cell from the identified at least one target cell, prior to receiving any request from the serving cell and/or upon receipt of any request from the serving cell. This slice-related information may be received at the slice controlling entity, for example, periodically and/or upon an event basis.

In an eighth step (S8"), the NRT of the identified target gNB may be updated with the slice-related information of the serving gNB, and the NRT of the serving gNB may be updated with the slice-related information of the identified target gNB.

It should be noted that the list of the slice-types, for which the serving gNB asks for support, may be based on the instantiated slices (i.e., already available slices) at the serving gNB and/or the slices associated with the UE devices that are currently or have been served by the serving gNB. It should be noted that exchanging the slice availability information and/or the slice-type support information during the establishment of the Xn communication allows to reduce the latency or delay possibly incurred when the slice availability information is exchanged after the Xn connection establishment on an event basis. Further, the slice availability information may be static information (e.g., the slices are already instantiated), while the slice-type support information may be semi-static or semi-dynamic information.

In summary, the present invention relates to a serving cell and a method for discovering slice-related information within a communication system. In particular, the method comprises the steps of identifying at least one target cell in the neighborhood of a serving cell by obtaining identification information from a UE device, obtaining slice-related information of the identified at least one target cell, establishing an Xn connection between the serving cell and the identified at least one target cell, and updating a neighbor relation table of the serving cell with the slice-related information of the identified at least one target cell, wherein the UE device, which has an active communication with the serving cell, is associated with at least one slice and/or a slice-type. The slice-related information of the identified at least one target cell may be obtained from broadcast system information, the identified at least one target cell during the Xn connection establishment, or a slice controlling entity. By means of the present invention, the cells and the gNBs associated to the cells may be aware of the slice-related information (i.e., the slice availability and/or the slice-type support) prior to HO execution, that is, for example, during the establishment of the Xn connection. Thereby, the HO decisions may be determined and optimized accordingly, and reduction in latency and signaling overhead may be achieved.

While the invention has been illustrated and described in detail in the drawings and the foregoing description, such illustration and description are to be considered illustrative or exemplary and not restrictive. The invention is not limited to the disclosed embodiments. From reading the present disclosure, other modifications will be apparent to a person skilled in the art. Such modifications may involve other features, which are already known in the art and may be used instead of or in addition to features already described herein.

The invention has been described in conjunction with various embodiments herein. However, other variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

Although the present invention has been described with reference to specific features and embodiments thereof, it is evident that various modifications and combinations can be made thereto without departing from the scope of the invention. The specification and drawings are, accordingly, to be regarded simply as an illustration of the invention as defined by the appended claims.

## Claims

1. A method for discovering slice-related information within a communication system, the method comprising:
obtaining (S2, S2"), by a serving cell from a user equipment, UE, device having an active communication with the serving cell and being associated with at least one slice and/or a slice-type, identification information through a measurement report, configured by a radio resource control, RRC of the serving cell, and identifying, by the serving cell, at least one target cell in the neighborhood of the serving cell ;
obtaining (S3, S5, S3", S5", S6"), by the serving cell, slice-related information of the identified at least one target cell; and
establishing (S6, S7"), by the serving cell, a connection Xn between the serving cell and the identified at least one target cell;
updating (S8, S8"), by the serving cell, a neighbor relation table, NRT, of the serving cell with the slice-related information of the identified at least one target cell;
wherein the obtained identification information comprises a physical cell ID, PCI of at least one target cell in the neighborhood of the serving cell;
wherein the obtaining (S3, S5, S3", S5", S6"), by the serving cell, slice-related information of the identified at least one target cell comprises:
when the obtained identification information from the UE device is not known by the serving cell or slice-related information of the identified at least one target cell is not up-to-date, instructing (S3), by the serving cell, the UE device to obtain a cell global identifier, CGI, of the identified at least one target cell along with the slice availability information of the at least one target cell; and receiving (S5), by the serving cell, the CGI of the identified at least one target cell and the slice availability information of the identified at least one target cell reported by the UE device, when the slice availability information is available in a broadcast system information; or
when the obtained identification information from the UE device is not known by the serving cell or slice-related information of the identified at least one target cell is not up-to-date, instructing (S3"), by the serving cell, the UE device to obtain a cell global identifier, CGI, of the identified at least one target cell; receiving (S5"), by the serving cell, the CGI of the identified at least one target cell reported by the UE device; sending (S6"), by the serving cell, a request for a slice availability information of the identified at least one target cell to a slice controlling entity, when the slice availability information is unavailable in the broadcast system information;
wherein the request comprises the CGI of the identified at least one target cell; and receiving (S6"), by the serving cell, the slice availability information of the identified at least one target cell from the slice controlling entity.

2. The method of claim 1, wherein the slice-related information comprises the slice availability information or a combination of the slice availability information and slice-type support information.

3. The method of claim 2, wherein the obtaining (S3, S5, S3", S5", S6"), by the serving cell, the slice-related information of the identified at least one target cell comprises: transmitting, by the serving cell, a request for the slice-related information of the identified at least one target cell towards a slice controlling entity; and
receiving, by the serving cell, the slice-related information of the identified at least one target cell from the slice controlling entity.

4. The method of any one of claims 1 to 5, wherein the slice controlling entity is a logical unit, which is located in the radio access network, RAN, or the core network, CN, or a RAN slice management module.

5. The method of claim 1, further comprises: transmitting (S6, S7"), by the serving cell, a request for the slice-type support information of the identified at least one target cell towards the identified target cell, when the at least one slice and/or the slice-type of the UE device is not contained in the slice availability information of the identified at least one target cell.

6. The method of claim 5, further comprises: receiving, by the serving cell, the slice-type support information of the identified at least one target cell from the identified at least one target cell.

7. The method of claim 5, wherein the request for the slice-type support information of the identified at least one target cell is transmitted from the serving cell towards the identified at least one target cell through the established connection Xn and/or during the connection Xn establishment, or the request for the slice-type support information of the identified at least one target cell, is transmitted from the serving cell towards the identified at least one target cell, through the slice controlling entity.

8. The method of claim 6, wherein the slice-type support information of the identified at least one target cell is received at the serving cell through the established connection Xn and/or during the connection Xn establishment,
or the slice-type support information of the identified at least one target cell, is received at the serving cell, from the identified at least one target cell, through the slice controlling entity.

9. A serving cell for discovering slice-related information within a communication system, the serving cell being adapted to:
obtain (S2, S2"), from a user equipment, UE, device having an active communication with the serving cell and being associated with at least one slice and/or a slice-type, identification information of a target cell through a measurement report, configured by a radio resource control, control, RRC of the serving cell, and identify at least one target cell in the neighborhood of the serving cell;
obtain (S3, S5, S3", S5", S6"), slice-related information of the identified at least one target cell; and
establish (S6, S7"), a connection Xn between the serving cell and the identified at least one target cell; and the serving cell being adapted to update a neighbor relation table, NRT, of the serving cell with the obtained slice-related information of the identified at least one target cell;
wherein the obtained identification information comprises a physical cell ID, PCI;
wherein the serving cell being adapted to obtain (S3, S5, S3", S5", S6") the slice-related information of the identified at least one target cell comprises the serving cell being adapted to:
when the obtained identification information from the UE device is not known by the serving cell or slice-related information of the identified at least one target cell is not up-to-date, instruct (S3) the UE device to obtain a cell global identifier, CGI, of the identified at least one target cell along with the slice availability information of the at least one target cell; and receive the CGI of the identified at least one target cell and the slice availability information of the identified at least one target cell reported by the UE device, when the slice availability information is available in a broadcast system information; or
when the obtained identification information from the UE device is not known by the serving cell or slice-related information of the identified at least one target cell is not up-to-date, instruct (S3") the UE device to obtain a cell global identifier, CGI, of the identified at least one target cell; receive the CGI of the identified at least one target cell reported by the UE device; send a request for a slice availability information of the identified at least one target cell to a slice controlling entity, when the slice availability information is unavailable in the broadcast system information;
wherein the request comprises the CGI of the identified at least one target cell; and receive the slice availability information of the identified at least one target cell from the slice controlling entity.

10. A communication system comprising:
a serving cell as claimed in claim 9; and
at least one target cell in the neighborhood of the serving cell.

11. A computer program comprising a program code that when executed on a computer results in performing all the steps of the method according to any one of claims 1 to 8.

## Patentansprüche

1. Verfahren zum Erkennen von Slice-bezogenen Informationen innerhalb eines Kommunikationssystems, wobei das Verfahren Folgendes umfasst:
Erhalten (S2, S2"), durch eine aktive Funkzelle von einer Benutzereinrichtungs(user *equipment -* UE)vorrichtung, die eine aktive Kommunikation mit der aktiven Funkzelle aufweist und mit wenigstens einem Slice und/oder einer Slice-Art verknüpft ist, von Identifikationsinformationen durch einen Messbericht, der durch eine Funkressourcensteuerung (*radio resource control-* RRC) der aktiven Funkzelle konfiguriert ist, und Identifizieren, durch die aktive Funkzelle, wenigstens einer Zielfunkzelle in der Nachbarschaft der aktiven Funkzelle;
Erhalten (S3, S5, S3", S5", S6"), durch die aktive Funkzelle, von Slice-bezogenen Informationen der identifizierten wenigstens einen Zielfunkzelle; und
Herstellen (S6, S7"), durch die aktive Funkzelle, einer Verbindung (Xn) zwischen der aktiven Funkzelle und der identifizierten wenigstens einen Zielfunkzelle;
Aktualisieren (S8, S8"), durch die aktive Funkzelle, einer Nachbarbeziehungstabelle (*neighbor relation table* - NRT) der aktiven Funkzelle mit den Slice-bezogenen Informationen der identifizierten wenigstens einen Zielfunkzelle;
wobei die erhaltenen Identifikationsinformationen eine physische Funkzellen-ID (*physical cell ID* - PCI) von wenigstens einer Zielfunkzelle in der Nachbarschaft der aktiven Funkzelle umfassen;
wobei das Erhalten (S3, S5, S3", S5", S6"), durch die aktive Funkzelle, von Slice-bezogenen Informationen der identifizierten wenigstens einen Zielfunkzelle Folgendes umfasst:
wenn die erhaltenen Identifikationsinformationen von der UE-Vorrichtung durch die aktive Funkzelle nicht bekannt sind oder Slice-bezogene Informationen der identifizierten wenigstens einen Zielfunkzelle nicht aktuell sind, Anweisen (S3), durch die aktive Funkzelle, der UE-Vorrichtung, einen globalen Funkzellenidentifizierer (*cell global identifier-* CGI) der identifizierten wenigstens einen Zielfunkzelle zusammen mit den Slice-Verfügbarkeitsinformationen der wenigstens einen Zielfunkzelle zu erhalten; und
Empfangen (S5), durch die aktive Funkzelle, des CGI der identifizierten wenigstens einen Zielfunkzelle und der Slice-Verfügbarkeitsinformationen der identifizierten wenigstens einen Zielfunkzelle, die durch die UE-Vorrichtung gemeldet werden, wenn die Slice-Verfügbarkeitsinformationen in Übertragungssysteminformationen verfügbar sind; oder
wenn die erhaltenen Identifikationsinformationen von der UE-Vorrichtung durch die aktive Funkzelle nicht bekannt sind oder Slice-bezogene Informationen der identifizierten wenigstens einen Zielfunkzelle nicht aktuell sind, Anweisen (S3"), durch die aktive Funkzelle, der UE Vorrichtung, einen globalen Funkzellenidentifizierer (CGI) der identifizierten wenigstens einen Zielfunkzelle zu erhalten;
Empfangen (S5"), durch die aktive Funkzelle, des CGI der identifizierten wenigstens einen Zielfunkzelle, die durch die UE-Vorrichtung gemeldet wird;
Senden (S6"), durch die aktive Funkzelle, einer Anforderung für Slice-Verfügbarkeitsinformationen der identifizierten wenigstens einen Zielfunkzelle an eine Slice-steuernde Instanz, wenn die Slice-Verfügbarkeitsinformationen in den Übertragungssysteminformationen nicht verfügbar sind;
wobei die Anforderung den CGI der identifizierten wenigstens einen Zielfunkzelle umfasst; und
Empfangen (S6"), durch die aktive Funkzelle, der Slice-Verfügbarkeitsinformationen der identifizierten wenigstens einen Zielfunkzelle von der Slice-steuernden Instanz.

2. Verfahren nach Anspruch 1, wobei die Slice-bezogenen Informationen die Slice-Verfügbarkeitsinformationen oder eine Kombination der Slice-Verfügbarkeitsinformationen und von Unterstützungsinformationen der Slice-Art umfassen.

3. Verfahren nach Anspruch 2, wobei das Erhalten (S3, S5, S3", S5", S6"), durch die aktive Funkzelle, der Slice-bezogenen Informationen der identifizierten wenigstens einen Zielfunkzelle Folgendes umfasst:
Übermitteln, durch die aktive Funkzelle, einer Anforderung für die Slice-bezogenen Informationen der identifizierten wenigstens einen Zielfunkzelle in Richtung einer Slice-steuernden Instanz; und
Empfangen, durch die aktive Funkzelle, der Slice-bezogenen Informationen der identifizierten wenigstens einen Zielfunkzelle von der Slice-steuernden Instanz.

4. Verfahren nach einem der Ansprüche 1 bis 5, wobei die Slice-steuernde Instanz eine logische Einheit ist, die sich in dem Funkzugangsnetzwerk (*radio access network-* RAN) oder dem Kernnetzwerk (*core network-* CN) oder einem RAN-Slice-Verwaltungsmodul befindet.

5. Verfahren nach Anspruch 1, das ferner Folgendes umfasst:
Übermitteln (S6, S7"), durch die aktive Funkzelle, einer Anforderung für die Unterstützungsinformationen der Slice-Art der identifizierten wenigstens einen Zielfunkzelle in Richtung der identifizierten Zielfunkzelle, wenn das wenigstens eine Slice und/oder die Slice-Art der UE-Vorrichtung nicht in den Slice-Verfügbarkeitsinformationen der identifizierten wenigstens einen Zielfunkzelle enthalten ist.

6. Verfahren nach Anspruch 5, das ferner Folgendes umfasst:
Empfangen, durch die aktive Funkzelle, der Unterstützungsinformationen der Slice-Art der identifizierten wenigstens einen Zielfunkzelle von der identifizierten wenigstens einen Zielfunkzelle.

7. Verfahren nach Anspruch 5, wobei die Anforderung für die Unterstützungsinformationen der Slice-Art der identifizierten wenigstens einen Zielfunkzelle von der aktiven Funkzelle in Richtung der identifizierten wenigstens einen Zielfunkzelle durch die hergestellte Verbindung (Xn) und/oder während der Verbindungs(Xn)herstellung übermittelt wird, oder die Anforderung für die Unterstützungsinformationen der Slice-Art der identifizierten wenigstens einen Zielfunkzelle von der aktiven Funkzelle in Richtung der identifizierten wenigstens einen Zielfunkzelle durch die Slice-steuernde Instanz übermittelt wird.

8. Verfahren nach Anspruch 6, wobei die Unterstützungsinformationen der Slice-Art der identifizierten wenigstens einen Zielfunkzelle an der aktiven Funkzelle durch die hergestellte Verbindung (Xn) und/oder während der Verbindungs(Xn)herstellung empfangen werden, oder die Unterstützungsinformationen der Slice-Art der identifizierten wenigstens einen Zielfunkzelle an der aktiven Funkzelle von der identifizierten wenigstens einen Zielfunkzelle durch die Slice-steuernde Instanz empfangen werden.

9. Aktive Funkzelle zum Erkennen von Slice-bezogenen Informationen innerhalb eines Kommunikationssystems, wobei die aktive Funkzelle für Folgendes angepasst ist:
Erhalten (S2, S2"), von einer Benutzereinrichtungs(UE)vorrichtung, die eine aktive Kommunikation mit der aktiven Funkzelle aufweist und mit wenigstens einem Slice und/oder einer Slice-Art verknüpft ist, von Identifikationsinformationen durch einen Messbericht, der durch eine Funkressourcensteuerung (RRC) der aktiven Funkzelle konfiguriert ist, und Identifizieren, durch die aktive Funkzelle, wenigstens einer Zielfunkzelle in der Nachbarschaft der aktiven Funkzelle;
Erhalten (S3, S5, S3", S5", S6") von Slice-bezogene Informationen der identifizierten wenigstens einen Zielfunkzelle; und
Herstellen (S6, S7) einer Verbindung (Xn) zwischen der aktiven Funkzelle und der identifizierten wenigstens einen Zielfunkzelle; und
wobei die aktive Funkzelle angepasst ist, um eine Nachbarbeziehungstabelle (NRT) der aktiven Funkzelle mit den erhaltenen Slice-bezogenen Informationen der identifizierten wenigstens einen Zielfunkzelle zu aktualisieren;
wobei die erhaltenen Identifikationsinformationen eine physische Funkzellen-ID (PCI) umfassen;
wobei die aktive Funkzelle angepasst ist, um die Slice-bezogenen Informationen der identifizierten wenigstens einen Zielfunkzelle zu erhalten (S3, S5, S3", S5", S6"), wobei die aktive Funkzelle für Folgendes angepasst ist:
wenn die erhaltenen Identifikationsinformationen von der UE-Vorrichtung durch die aktive Funkzelle nicht bekannt sind oder Slice-bezogene Informationen der identifizierten wenigstens einen Zielfunkzelle nicht aktuell sind, Anweisen (S3) der UE-Vorrichtung, einen globalen Funkzellenidentifizierer (CGI) der identifizierten wenigstens einen Zielfunkzelle zusammen mit den Slice-Verfügbarkeitsinformationen der wenigstens einen Zielfunkzelle zu erhalten; und
Empfangen des CGI der identifizierten wenigstens einen Zielfunkzelle und der Slice-Verfügbarkeitsinformationen der identifizierten wenigstens einen Zielfunkzelle, die durch die UE-Vorrichtung gemeldet werden, wenn die Slice-Verfügbarkeitsinformationen in Übertragungssysteminformationen verfügbar sind;
oder
wenn die erhaltenen Identifikationsinformationen von der UE-Vorrichtung durch die aktive Funkzelle nicht bekannt sind oder Slice-bezogene Informationen der identifizierten wenigstens einen Zielfunkzelle nicht aktuell sind, Anweisen (S3") der UE Vorrichtung, einen globalen Funkzellenidentifizierer (CGI) der identifizierten wenigstens einen Zielfunkzelle zu erhalten;
Empfangen des CGI der identifizierten wenigstens einen Zielfunkzelle, die durch die UE-Vorrichtung gemeldet wird;
Senden einer Anforderung für Slice-Verfügbarkeitsinformationen der identifizierten wenigstens einen Zielfunkzelle an eine Slice-steuernde Instanz, wenn die Slice-Verfügbarkeitsinformationen in den Übertragungssysteminformationen nicht verfügbar sind;
wobei die Anforderung den CGI der identifizierten wenigstens einen Zielfunkzelle umfasst; und
Empfangen der Slice-Verfügbarkeitsinformationen der identifizierten wenigstens einen Zielfunkzelle von der Slice-steuernden Instanz.

10. Kommunikationssystem, das Folgendes umfasst:
eine aktive Funkzelle nach Anspruch 9; und
wenigstens eine Zielfunkzelle in der Nachbarschaft der aktiven Funkzelle.

11. Computerprogramm, das einen Programmcode umfasst, der, wenn er auf einem Computer ausgeführt wird, zu einem Durchführen aller Schritte des Verfahrens nach einem der Ansprüche 1 bis 8 führt.

## Revendications

1. Procédé de découverte d'informations relatives à une tranche dans un système de communication, le procédé comprenant :
l'obtention (S2, S2"), par une cellule de desserte à partir d'un dispositif d'équipement utilisateur, UE, ayant une communication active avec la cellule de desserte et étant associé à au moins une tranche et/ou un type de tranche, d'informations d'identification à travers un rapport de mesure, configuré par une gestion de ressources radio, RRC de la cellule de desserte, et l'identification, par la cellule de desserte, d'au moins une cellule cible dans le voisinage de la cellule de desserte ;
l'obtention (S3, S5, S3", S5", S6"), par la cellule de desserte, d'informations relatives à une tranche de l'au moins une cellule cible identifiée ; et
l'établissement (S6, S7"), par la cellule de desserte, d'une connexion Xn entre la cellule de desserte et l'au moins une cellule cible identifiée ;
la mise à jour (S8, S8"), par la cellule de desserte, d'une table de relations de voisinage, NRT, de la cellule de desserte avec les informations relatives à une tranche de l'au moins une cellule cible identifiée ;
dans lequel les informations d'identification obtenues comprennent un ID de cellule physique, PCI, d'au moins une cellule cible dans le voisinage de la cellule de desserte ;
dans lequel l'obtention (S3, S5, S3", S5", S6"), par la cellule de desserte, d'informations relatives à une tranche de l'au moins une cellule cible identifiée comprend :
lorsque les informations d'identification obtenues à partir du dispositif UE ne sont pas connues de la cellule de desserte ou que les informations relatives à une tranche de l'au moins une cellule cible identifiée ne sont pas à jour, le fait d'ordonner (S3), par la cellule de desserte, au dispositif UE d'obtenir un identifiant global de cellule, CGI, de l'au moins une cellule cible identifiée avec les informations de disponibilité de tranche de l'au moins une cellule cible ; et la réception (S5), par la cellule de desserte, du CGI de l'au moins une cellule cible identifiée et des informations de disponibilité de tranche de l'au moins une cellule cible identifiée signalées par le dispositif UE, lorsque les informations de disponibilité de tranche sont disponibles dans des informations de système de diffusion ; ou
lorsque les informations d'identification obtenues à partir du dispositif UE ne sont pas connues de la cellule de desserte ou que les informations relatives à une tranche de l'au moins une cellule cible identifiée ne sont pas à jour, le fait d'ordonner (S3"), par la cellule de desserte, au dispositif UE d'obtenir un identifiant global de cellule, CGI, de l'au moins une cellule cible identifiée ; la réception (S5"), par la cellule de desserte, du CGI de l'au moins une cellule cible identifiée rapportée par le dispositif UE ; l'envoi (S6"), par la cellule de desserte, d'une demande d'informations de disponibilité de tranche de l'au moins une cellule cible identifiée à une entité de contrôle de tranche, lorsque les informations de disponibilité de tranche ne sont pas disponibles dans les informations du système de diffusion ;
dans lequel la demande comprend le CGI de l'au moins une cellule cible identifiée ; et la réception (S6"), par la cellule de desserte, des informations de disponibilité de tranche de l'au moins une cellule cible identifiée de l'entité de contrôle de tranche.

2. Procédé selon la revendication 1, dans lequel les informations relatives à une tranche comprennent les informations de disponibilité de tranche ou une combinaison des informations de disponibilité de tranche et des informations de prise en charge de type de tranche.

3. Procédé selon la revendication 2, dans lequel l'obtention (S3, S5, S3", S5", S6"), par la cellule de desserte, des informations relatives à une tranche de l'au moins une cellule cible identifiée comprend :
l'émission, par la cellule de desserte, d'une demande des informations relatives à une tranche de l'au moins une cellule cible identifiée vers une entité de contrôle de tranche ; et
la réception, par la cellule de desserte, des informations relatives à une tranche de l'au moins une cellule cible identifiée provenant de l'entité de contrôle de tranche.

4. Procédé selon l'une quelconque des revendications 1 à 5, dans lequel l'entité de contrôle de tranche est une unité logique, qui est située dans le réseau d'accès radio, RAN, ou le réseau central, CN, ou un module de gestion de tranche RAN.

5. Procédé selon la revendication 1, comprenant en outre :
l'émission (S6, S7"), par la cellule de desserte, d'une demande des informations de prise en charge de type de tranche de l'au moins une cellule cible identifiée vers la cellule cible identifiée, lorsque l'au moins une tranche et/ou le type de tranche du dispositif UE n'est pas contenu dans les informations de disponibilité de tranche de l'au moins une cellule cible identifiée.

6. Procédé selon la revendication 5, comprenant en outre :
la réception, par la cellule de desserte, des informations de prise en charge de type de tranche de l'au moins une cellule cible identifiée provenant de l'au moins une cellule cible identifiée.

7. Procédé selon la revendication 5, dans lequel la demande d'informations de prise en charge de type de tranche de l'au moins une cellule cible identifiée est émise depuis la cellule de desserte vers l'au moins une cellule cible identifiée à travers la connexion Xn établie et/ou pendant l'établissement de la connexion Xn, ou la demande d'informations de prise en charge de type tranche de l'au moins une cellule cible identifiée est émise depuis la cellule de desserte vers l'au moins une cellule cible identifiée à travers l'entité de contrôle de tranche.

8. Procédé selon la revendication 6, dans lequel les informations de prise en charge de type de tranche de l'au moins une cellule cible identifiée sont reçues au niveau de la cellule de desserte à travers la connexion Xn établie et/ou lors de l'établissement de la connexion Xn, ou les informations de prise en charge de type de tranche de l'au moins une cellule cible identifiée sont reçues au niveau de la cellule de desserte de l'au moins une cellule cible identifiée à travers l'entité de contrôle de tranche.

9. Cellule de desserte permettant de découvrir des informations relatives à une tranche dans un système de communication, la cellule de desserte étant adaptée pour :
obtenir (S2, S2"), à partir d'un dispositif d'équipement utilisateur, UE, ayant une communication active avec la cellule de desserte et étant associé à au moins une tranche et/ou un type de tranche, des informations d'identification d'une cellule cible à travers un rapport de mesure, configuré par une commande de gestion de ressources radio, RRC, de la cellule de desserte, et identifier au moins une cellule cible dans le voisinage de la cellule de desserte ;
obtenir (S3, S5, S3", S5", S6"), des informations relatives à une tranche de l'au moins une cellule cible identifiée ; et
établir (S6, S7"), une connexion Xn entre la cellule de desserte et l'au moins une cellule cible identifiée ; et
la cellule de desserte étant adaptée pour mettre à jour une table de relations de voisinage, NRT, de la cellule de desserte avec les informations relatives à une tranche obtenues de l'au moins une cellule cible identifiée ;
les informations d'identification obtenues comprenant un ID de cellule physique, PCI ;
la cellule de desserte qui est adaptée pour obtenir (S3, S5, S3", S5", S6") les informations relatives à une tranche de l'au moins une cellule cible identifiée comprenant la cellule de desserte qui est adaptée pour :
lorsque les informations d'identification obtenues du dispositif UE ne sont pas connues de la cellule de desserte ou que les informations relatives à une tranche de l'au moins une cellule cible identifiée ne sont pas à jour, donner l'ordre (S3) au dispositif UE d'obtenir un identifiant global de cellule, CGI, de l'au moins une cellule cible identifiée avec les informations de disponibilité de tranche de l'au moins une cellule cible ; et recevoir le CGI de l'au moins une cellule cible identifiée et les informations de disponibilité de tranche de l'au moins une cellule cible identifiée signalées par le dispositif UE, lorsque les informations de disponibilité de tranche sont disponibles dans des informations de système de diffusion ; ou
lorsque les informations d'identification obtenues à partir du dispositif UE ne sont pas connues de la cellule de desserte ou que les informations relatives à une tranche de l'au moins une cellule cible identifiée ne sont pas à jour, donner l'ordre (S3") au dispositif UE d'obtenir un identifiant global de cellule, CGI, de l'au moins une cellule cible identifiée ; recevoir le CGI de l'au moins une cellule cible identifiée signalée par le dispositif UE ; envoyer une demande d'informations de disponibilité de tranche de l'au moins une cellule cible identifiée à une entité de contrôle de tranche, lorsque les informations de disponibilité de tranche ne sont pas disponibles dans les informations du système de diffusion ;
la demande comprenant le CGI de l'au moins une cellule cible identifiée ; et recevoir les informations de disponibilité de tranche de l'au moins une cellule cible identifiée de l'entité de contrôle de tranche.

10. Système de communication, comprenant :
une cellule de desserte selon la revendication 9 ; et
au moins une cellule cible dans le voisinage de la cellule de desserte.

11. Programme informatique comprenant un code de programme qui, lorsqu'il est exécuté sur un ordinateur, entraîne la réalisation de toutes les étapes du procédé selon l'une quelconque des revendications 1 à 8.
